# EUROPÄISCHE PATENTSCHRIFT

(11) **EP 2 238 052 B1**
(45) Veröffentlichungstag und Bekanntmachung des Hinweises auf die Patenterteilung: **01.05.2013**
(21) Anmeldenummer: 09707820.8
(22) Anmeldetag: 04.02.2009
(51) Int. Cl.: B65G 1/04

(54) **LAGERREGALSYSTEM MIT TRANSFERFAHRZEUG, INSBESONDERE IM LUFTFRACHTVERKEHR, ZUM EIN- UND AUSLAGERN VON STÜCKGUTCONTAINERN**
STORAGE SHELF SYSTEM WITH TRANSFER VEHICLE, IN PARTICULAR IN AIR FREIGHT TRAFFIC, FOR LOADING AND UNLOADING OF BULK GOODS CONTAINERS
SYSTÈME DE RAYONNAGE POUR LE STOCKAGE AVEC VÉHICULE DE TRANSFERT, UTILISÉ EN PARTICULIER DANS LE TRAFIC DE FRET AÉRIEN POUR STOCKER ET PRÉLEVER DES CONTENEURS DE MARCHANDISES

(30) Priorität: 07.02.2008 DE 102008007826
(43) Veröffentlichungstag der Anmeldung: 13.10.2010
(73) Patentinhaber: Siemens Aktiengesellschaft, 80333 München (DE)
(72) Erfinder: KLEIN, Matthias, 63456 Hanau (DE); WAPPLER, Thomas, 65624 Altendiez (DE)
(74) Vertreter: Wolff, Harry
(86) Internationale Anmeldenummer: PCT/EP2009/051221
(87) Internationale Veröffentlichungsnummer: WO 2009/098211

(56) Entgegenhaltungen:
- WO-A-2008/141870
- DE-A1- 4 213 835
- FR-A- 2 552 740

## Beschreibung

Die Erfindung betrifft ein lagerregalsystem mit Transferfahrzeug (TV) und korrespondierendem Liftsystem, mit den Merkmalen des Oberbegriffs des Anspruchs 1. Üblicherweise werden auf Umschlagplätzen für Stückgutcontainer zum Umschlagen der Lagereinheiten Flurfördergeräte bzw. -fahrzeuge, wie z. B. Gabelstapler eingesetzt. Mittels der Fahrzeuge werden die Lagereinheiten zur Ein- bzw. Auslagerung in die Lagerplätze bzw. aus den Lagerplätzen zu- oder abgeführt oder zur Zwischenlagerung innerhalb des Umschlagplatzes oder der Umschlaghalle hin- und herbewegt.

Um den Umschlag der Lagereinheiten zu ermöglichen, sind üblicherweise zwischen den Lagerplätzen Lagergassen oder Lagerbahnen vorgesehen, innerhalb derer sich die Fahrzeuge bewegen. Je nach Größe des Regallagers auf dem Umschlagplatz oder in der Umschlaghalle werden zur Bedienung der Lagerplätze mehrere Fahrzeuge in einer Lagerbahn benötigt. Dabei sind die aus dem Umschlag der Lagereinheiten resultierenden Verfahr- oder Umschlagzeiten, d.h. die Zeit, die ein Fahrzeug für die Aufnahme und Abgabe der Stückgutcontainer bei Ein- bzw. Auslagerung bzw. die erneute Aufnahme und Abgabe bei einem Umstapeln einer oder mehrerer Lagereinheiten benötigt, von Bedeutung und beeinflusst die Durchsatzleistung des Lagers. Bei dem Einsatz eines Fahrzeugs innerhalb einer Lagergasse ist keine Umschlagredundanz, d.h. gleichzeitige Aus- und Einlagerung mehrerer Lagereinheiten in die Lagerplätze einer Lagerbahn, gegeben. Durch den Einsatz mehrerer Fahrzeuge kann eine solche Umschlagredundanz nur dann erzielt werden, wenn sich die Fahrzeuge in der Lagergasse nicht gegenseitig behindern. Somit ist nur ein sehr eingeschränkter Zugriff auf die einzulagernden und/oder auszulagernden Lagereinheiten möglich. Die gegenseitige Behinderung der Fahrzeuge kann man vermeiden, wenn im Fall mehrerer übereinander liegender Einlagerungsebenen in jeder Einlagerungsebene ein dieser Ebene zugeordnetes Transferfahrzeug verfahrbar ist, für das jeweils eine individuelle Schienenbahn vorgesehen ist. Diese Lösung ist allerdings teuer, weil eine große Anzahl von Transferfahrzeugen vorgehalten werden muss und ein entsprechendes Schienensystem installiert werde muss.

Aus der DE 42 13 835 A1 ist ein Transferfahrzeug mit mehreren übereinander angeordneten Ebenen sowie ein Liftsystem bekannt, wobei die Ebenen des Transferfahrzeugs in der Übergabeposition von Containern gleichzeitig mit mehreren übereinander liegenden Einlagerungsebenen fluchten. Dadurch können mindestens zwei Container vom Transferfahrzeug aufgenommen und transportiert werden.

FR 2 552 740 beschreibt ein gattungsgemäßen Lagerregalsystem.

Der Erfindung liegt die Aufgabe zugrunde, ein Lagerregalsystem mit Transferfahrzeug und korrespondierendem Liftsystem für den Einsatz in einem vorstehend beschriebenen Lagerregalsystem zu schaffen, das gegenüber herkömmlichen Transferfahrzeugen eine höhere Leistung beim Ein- und Auslagern der Lagereinheiten erbringt und die Investitionskosten eines solchen Lagerregalsystems verringert.

Die Aufgabe wird erfindungsgemäß gelöst durch die Merkmale des unabhängigen Anspruchs 1. Vorteilhafte Weiterbildungen der Erfindung sind Gegenstand der Unteransprüche.

Erfindungsgemäß ist das Transferfahrzeug über eine Einlagerungsebene des Lagerregalsystems mit dem Liftsystem verbunden.

Zum Einlagern eines Containers muss dieser auf das Niveau der Ebene des Transferfahrzeuges angehoben werden. Dazu dient das Liftsystem, mit dem der Container auf eine Einlagerungsebene des Lagerregalsystems angehoben und über diese auf die niveaugleiche Ebene des Transferfahrzeuges übergeben wird. Das Liftsystem kann in das Lagerregalsystem integriert sein oder daneben aufgestellt sein.

Es können Transferfahrzeuge eingespart werden, mehrere Lagerplätze für die Stückgutcontainer, z.B. zwei, können von einem mehrere Stückgutcontainer aufnehmenden Transferfahrzeug bedient werden. Mit entsprechender Logistik werden Fahrwege eingespart und die Leistung des Systems erhöht. Die mehreren Ebenen des Transferfahrzeug zur Aufnahme je eines Stückgutcontainers sind hinsichtlich ihrer Anordnung und Abmessung den Lagerplätzen der Lagerregale angepasst, dass heißt, die Ebenen des Transferfahrzeuges fluchten mit den Einlagerungsebenen des Regalsystems und den Lagerplätzen, so dass eine ungestörte Übernahme oder Übergabe des Stückgutcontainers von dem bzw. auf das Transferfahrzeug möglich ist.

Um die Stückgutcontainer in die Ebenen des Transferfahrzeuges anzuheben, korrespondiert das Transferfahrzeug mit einem Liftsystem innerhalb des Lagerregalsystems. Das macht zusätzliche Hubeinrichtungen am Transferfahrzeug entbehrlich.

Obgleich üblicherweise zwei Ebenen zur Aufnahme je eines Stückgutcontainers und gleichzeitigen Bedienung von zwei Einlagerungsebenen und deren Lagerplätze auf einem Transferfahrzeug vorgesehen sein werden, ist die Erfindung nicht darauf beschränkt; auch mehr als zwei Ebenen auf einem Transferfahrzeug sind denkbar.

Selbst wenn die mehreren Ebenen nicht gleichzeitig, sondern wie ein Merkmal der Erfindung vorsieht, in unmittelbarer Abfolge von nur einem Transferfahrzeug bedienbar sind, erhöht sich die Leistung des Systems auf Grund der eingesparten Leerfahrten.

Das Transferfahrzeug ist, wie die bekannten, mit nur einer Ebene ausgestatteten Transferfahrzeuge auf Fahrbahnen oder Schienen in einer in dem Lagerregalsystem gebildeten Lagergasse verfahrbar. Es ist auch möglich, dass in einer Lagergasse in mehreren Einlagerungsebenen mehrere Transferfahrzeuge verfahrbar sind, von denen eines oder mehrere in erfindungsgemäßer Weise vertikal übereinander angeordnete Ebenen zur Aufnahme der Stückgutcontainer aufweisen.

Ein Ausführungsbeispiel der Erfindung wird anhand einer Zeichnung näher erläutert. Darin zeigen:
- Fig. 1: ein Transferfahrzeug nach der Erfindung mit zwei übereinander angeordneten Ebenen,
- Fig. 2: eine Draufsicht auf ein Lagerregalsystem mit einem erfindungsgemäßen Transferfahrzeug und
- Fig. 3: eine 3-D Darstellung des Lagerregalsystem nach Figur 2

Einander entsprechende Teile sind in allen Figuren mit den gleichen Bezugszeichen versehen.

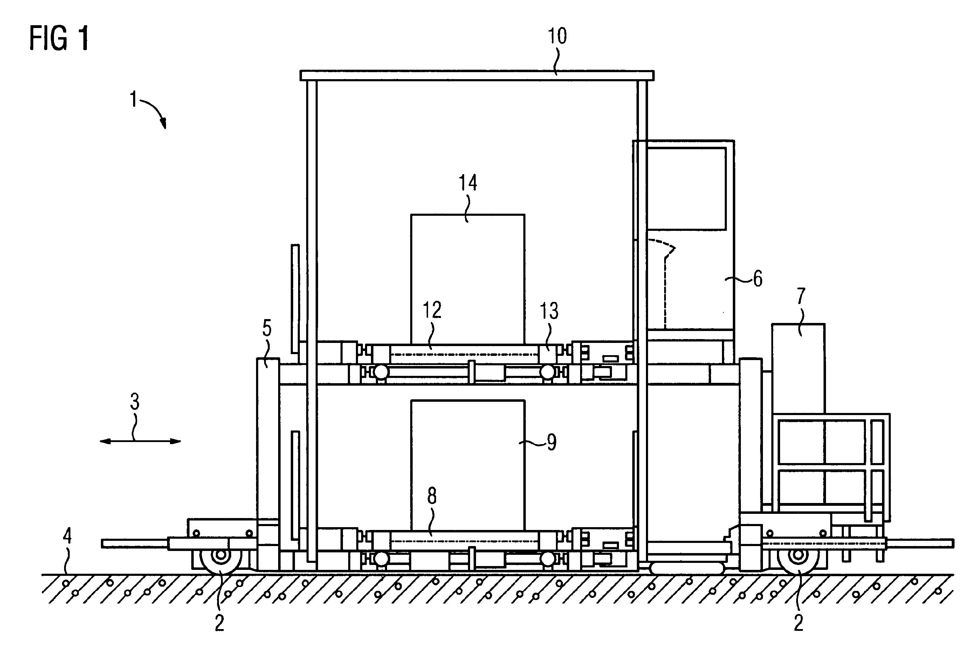

In Figur 1 ist in schematischer Darstellung die Seitenansicht eines erfindungsgemäßen Transferfahrzeuges dargestellt, das insgesamt mit 1 bezeichnet ist. Das Transferfahrzeug 1 ist auf Rädern 2 in Pfeilrichtung 3 auf Fahrbahnen 4 im Lagerregalsystem oder am Boden verfahrbar. Die Räder 2 sind an dem mit 5 bezeichneten Rahmen des Transferfahrzeuges 1 angeordnet, der auch die hier nicht näher beschriebenen Antriebe und die Steuerung für das Transferfahrzeug 1 aufnimmt. Mit 6 ist ein Steuerstand bezeichnet, der auf dem Transferfahrzeug 1 mitgeführt wird, ein Schaltschrank für die Elektrik und Steuerung ist mit 7 beziffert. Das Transferfahrzeug 1 weist im unteren Bereich eine Rollenbahn 8 auf, die zur Aufnahme eines Stückgutcontainers, der bei 9 angedeutet ist, gestaltet ist. Die Rollenbahn 8 verläuft senkrecht zur Zeichnungsebene und gestattet in diese Richtung das Ein- und Auslagern des Stückgutcontainers 9 aus dem Transferfahrzeug bzw. in das Transferfahrzeug 1 und des übergebend des Stückgutcontainers 9 an einen Lagerplatz des bei 10 angedeuteten Lagerregalsystems. Zu diesem Zweck ist die durch die Rollenbahn 8 gebildete Ebene 8a zur Aufnahme des Stückgutcontainers 9 auf dem Transferfahrzeug 1 so angeordnet, dass sie mit einer Ebene der Lagerplätze des Lagerregalsystems 10 fluchtet und so ein Übergeben oder Übernehmen der Stückgutcontainer 9 ermöglicht.

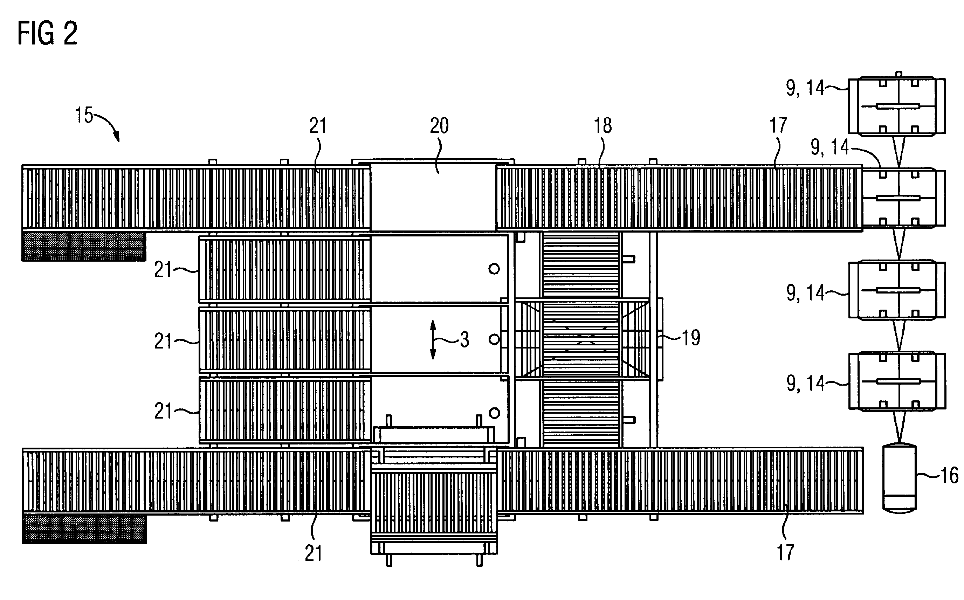

Das Transferfahrzeug 1 weist vertikal oberhalb der durch die Rollenbahn 8 gebildeten Ebene eine zweite Ebene 12 auf, die durch die Rollenbahn 13 gebildet ist. In der Ebene 12 kann ein zweiter Stückgutcontainer 14 aufgenommen werden und zusammen mit dem Stückgutcontainer 9 auf dem Transferfahrzeug 1 entlang der Lagergasse (Figur 2) verfahren werden.

In Figur 2 ist eine Draufsicht auf das Lagerregalsystem 15 dargestellt, in das die Stückgutcontainer 9, 14 mit Hilfe des Transferfahrzeuges 1 ein- und auslagerbar sind. Auf der rechten Seite der Figur 2 ist ein von einer Zugmaschine 16 gezogener Zug mit insgesamt vier Stückgutcontainern 9, 14 zu erkennen, der, beispielsweise von einem Flugzeug kommend, die Stückgutcontainer 9, 14 zu dem Lagerregalsystem 15 transportiert. Dort werden die Stückgutcontainer 9, 14 von der unteren Rollenbahn 17 übernommen und in den Bereich 18 eines Liftsystems 19 verbracht, mit dem die Stückgutcontainer 9, 14 auf das gewünschte Niveau bzw. in die gewünschte Ebene 8a oder 12 des Lagerregalsystems 15 angehoben werden. In gleicher Weise kann die Einlagerung der Stückgutcontainer 9, 14 über die (in der Zeichnung) untere Rollenbahn 17 dem Liftsystem 19 zugeführt werden. Das Liftsystem 19 ist in der Lage, die Stückgutcontainer 9, 14 in die jeweils gewünschte Ebene 8a bzw. 12 eines erfindungsgemäßen Transferfahrzeuges 1 zu heben, wobei das Niveau der jeweiligen Ebene 8a bzw. 12 des Transferfahrzeuges 1 jeweils einer Einlagerungsebene des Lagerregalsystems 15 entspricht. Das bedeutet, dass die Transferfahrzeuges selbst keine Lifteinrichtung aufweisen, sondern lediglich innerhalb der Lagergasse in Pfeilrichtung 3 verfahrbar sind. Die Lagergasse des Lagerregalsystems 15 ist mit 20 bezeichnet; in ihr sind alle Transferfahrzeuge in Pfeilrichtung 3 so verfahrbar, dass sie die parallel zur Lagergasse und Fahrtrichtung 3 angeordneten Lagerplätze 21 bedienen können. Die Lagerplätze 21 können mehrfach tief sein, d.h. es können mehrere Stückgutcontainer hintereinander auf den Lagerplätzen einer Lagerebene zwischengelagert werden.

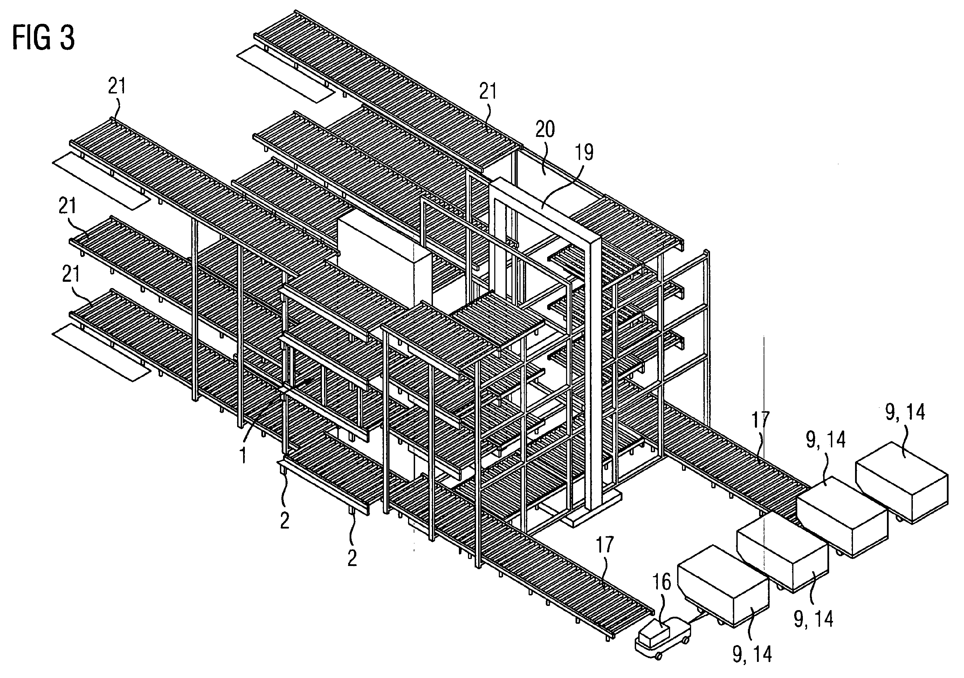

In Figur 3 ist das Lagerregalsystem 15 in einer dreidimensionalen Darstellung gezeigt. Gleiche Teile sind gleich bezeichnet. In der Lagergasse 20 sind in verschiedenen Ebenen Transferfahrzeuge verfahrbar, von denen einige in herkömmlicher Weise nur eine Ebene zur Aufnahme eines Stückgutcontainers aufweisen, andere Transferfahrzeuge 1 weisen zwei vertikal übereinanderliegende Ebenen zur Aufnahme von gleichzeitig zwei Stückgutcontainern 9, 14 auf. Ein solches erfindungsgemäßes Transferfahrzeug ist bei 1 erkennbar, dieses Transferfahrzeug 1 bedient gleichzeitig zwei übereinanderliegende Lagerebenen und ermöglicht das gleichzeitige oder aufeinanderfolgende Ein- und Auslagern von zwei Stückgutbehältern 9, 14 während einer Einlagerungs- oder Auslagerungsfahrt.

Durch die Aufnahme von zwei Stückgutcontainern auf einem Transferfahrzeug wird ein ansonsten erforderliches, in einer benachbarten Ebene verfahrbares Transferfahrzeug eingespart.

Der Transport von zwei Stückgutcontainern gleichzeitig auf einem Transferfahrzeug 1 verkürzt zudem die Verfahrwege und spart damit erhebliche Zeit beim Handling der Stückgutcontainer.

## Patentansprüche

1. Lagerregalsystem mit Transferfahrzeug (TV) und korrespondierendem Liftsystem (19), insbesondere im Luftfrachtverkehr, zum Ein- und Auslagern von Stückgutcontainern (ULDs) in die in mehreren Einlagerungsebenen vertikal übereinander und horizontal nebeneinander liegenden Lagerplätze des Lagerregalsystems mit mehreren Regalreihen, wobei das Transferfahrzeug (1) zur gleichzeitigen Aufnahme und zum Transport von mindestens zwei Stückgutcontainern (9, 14) eingerichtet ist und zur Aufnahme je eines Stückgutcontainers (9, 14) mehrere vertikal übereinander angeordnete Ebenen (8a, 12) aufweist, die hinsichtlich ihrer Abmessungen dem Lagerplatz eines Stückgutcontainers (9, 14) angepasst sind und die in der Übergabeposition der Stückgutcontainer (9, 14) gleichzeitig mit zwei übereinander liegenden Einlagerungsebenen fluchten, und wobei mit Hilfe des Liftsystems (19) die Stückgutcontainer (9, 14) in die Ebenen (8a, 12) des Transferfahrzeuges (1) anheb- und absenkbar sind,
**dadurch gekennzeichnet,**
**dass** das Transferfahrzeug (1) über eine Einlagerungsebene des Lagerregalsystems (15) mit dem Liftsystem (19) verbunden ist.

2. Lagerregalsystem nach Anspruch 1,
**dadurch gekennzeichnet,**
**dass** auf einem Transferfahrzeug (1) zwei Ebenen zur Aufnahme je eines Stückgutcontainers (9 oder 14) angeordnet sind und jede Ebene (8a, 12) zur Bedienung einer von zwei übereinander angeordneten Einlagerungsebenen und deren Lagerplätzen (21) vorgesehen sind.

3. Lagerregalsystem nach Anspruch 2, **dadurch gekennzeichnet, dass** von dem Transferfahrzeug (1) zwei Lagerplätze (21) in unterschiedlichen Einlagerungsebenen gleichzeitig oder in unmittelbarer Abfolge ohne Leerfahrt bedienbar sind.

4. Lagerregalsystem nach einem der Ansprüche 1 bis 3,
**dadurch gekennzeichnet, dass** das Transferfahrzeug (1) auf Fahrbahnen (4) in einer in dem Lagerregalsystem (15) gebildeten Lagergasse (20) verfahrbar ist.

5. Lagerregalsystem nach einem der Ansprüche 1 bis 4,
**dadurch gekennzeichnet, dass** in einer Lagergasse (20) mehrere Transferfahrzeug (1) verfahrbar sind, von denen mindestens eines mehrere vertikal übereinander angeordnete Ebenen (8a, 12) aufweist.

## Claims

1. Shelf storage system with a transfer vehicle (TV) and corresponding lift system (19), in particular in air freight traffic, for loading and unloading bulk goods containers (ULDs) in the plurality of storage spaces of the shelf storage system comprising a plurality of shelf rows, said storage spaces being located vertically above one another and horizontally beside one another, the transfer vehicle (1) being set up for the simultaneous holding and transport of at least two bulk goods containers (9, 14) and having a plurality of planes (8a, 12) which are arranged vertically above one another to hold a bulk goods container (9, 14) in each case and which, with regard to their dimensions, are matched to the storage space of a bulk goods container (9, 14) and which, in the transfer position of the bulk goods containers (9, 14), are simultaneously aligned with two loading planes located above one another, and it being possible for the bulk goods containers (9, 14) to be raised and lowered to the planes of the transfer vehicle (1) with the aid of the lift system (19), **characterized in that** the transfer vehicle (1) is connected to the lift system (19) via a loading plane of the shelf storage system (15).

2. Shelf storage system according to Claim 1,
**characterized in that**
on a transfer vehicle (1) there are arranged two planes to hold a bulk goods container (9 or 14) each, and each plane (8a, 12) is provided to serve one or two loading planes arranged one above the other and the storage spaces (21) thereof.

3. Shelf storage system according to Claim 2,
**characterized in that**
two storage spaces (21) in different loading planes can be served simultaneously or in direct succession without any empty travel.

4. Shelf storage system according to one of Claims 1 to 3, **characterized in that** the transfer vehicle (1) can be moved on travel tracks (14) in a storage aisle (20) formed in the shelf storage system (15).

5. Shelf storage system according to one of Claims 1 to 4, **characterized in that** it is possible for a plurality of transfer vehicles (1) to be moved in a plurality of loading planes in a storage aisle (20), of which transfer vehicles at least one has planes (8a, 12) arranged vertically above one another.

## Revendications

1. Système de rayonnage pour le stockage, comprenant un véhicule ( TV ) de transfert et un système ( 19 ) élévateur correspondant, notamment dans le trafic de fret aérien, pour stocker et prélever des conteneurs ( ULDs ) de marchandise dans les emplacements de stockage du système de rayonnage de stockage se trouvant dans plusieurs plans de stockage verticalement les uns au dessus des autres et horizontalement les uns à côté des autres avec plusieurs rangées de rayonnage, le véhicule ( 1 ) de transfert étant conçu pour la réception simultanée et le transport d'au moins deux conteneurs ( 9, 14 ) de marchandise et ayant, pour la réception de respectivement un conteneur ( 9, 14 ) de marchandise, plusieurs plans ( 8a, 12 ) disposés verticalement les uns au dessus des autres, qui sont adaptés du point de vue leur dimension à l'emplacement de stockage d'un conteneur ( 9, 14 ) de marchandise et qui, dans la position de transfert des conteneurs ( 9, 14 ) de marchandise, sont alignés en même temps avec deux plans de stockage disposés l'un au dessus de l'autre, et dans lequel à l'aide du système ( 19 ) élévateur les conteneurs ( 9, 14 ) de marchandise peuvent être soulevés et abaissés dans les plans ( 8a, 12 ) du véhicule ( 1 ) de transport,
**caractérisé**
**en ce que** le véhicule ( 1 ) de transfert est relié au système ( 19 ) élévateur par un plan de stockage du système ( 15 ) de rayonnage pour le stockage.

2. Système de rayonnage pour le stockage suivant la revendication 1, **caractérisé**
**en ce que** sur le véhicule ( 1 ) de transport sont disposés deux plans de réception de respectivement un conteneur ( 9, 14 ) de marchandises et chaque plan ( 8a, 12 ) est prévu pour desservir l'un de deux plans de stockage disposés l'un au dessus de l'autre et leurs emplacements ( 21 ) de stockage.

3. Système de rayonnage pour le stockage suivant la revendication 2, **caractérisé**
**en ce que** deux emplacements ( 21 ) de stockage dans des plans de stockage différents peuvent être desservis par le véhicule ( 1 ) de transfert simultanément ou immédiatement à la suite sans trajet à vide.

4. Système de rayonnage pour le stockage suivant l'une des revendications 1 à 3, **caractérisé**
**en ce que** le véhicule ( 1 ) de transfert peut se déplacer sur des voies ( 4 ) dans un chemin ( 20 ) de stockage formé dans les systèmes ( 15 ) de rayonnage pour le stockage.

5. Système de rayonnage pour le stockage suivant l'une des revendications 1 à 4, **caractérisé**
**en ce que** dans le chemin ( 20 ) de stockage peuvent se déplacer plusieurs véhicules ( 1 ) de transfert, dont l'un au moins a plusieurs plans ( 8a, 12 ) disposés les uns au dessus des autres verticalement.
